# EUROPEAN PATENT SPECIFICATION

(11) **EP 0 295 717 B1**
(45) Date of publication and mention of the grant of the patent: **13.01.1993**
(21) Application number: 88109779.4
(22) Date of filing: 20.06.1988
(51) Int. Cl.: C08L 27/12

(54) **Composition based on fluoroelastomers and on modified olefinic polymers**
Zusammensetzung auf Basis von Fluorelastomeren und modifizierten Polyolefinen
Composition à base d'élastomères fluorocarbonés et de polyoléfines modifiées

(30) Priority: 19.06.1987 IT 2095687
(43) Date of publication of application: 21.12.1988
(73) Proprietor: AUSIMONT S.p.A., I-20121 Milano (IT)
(72) Inventor: Moggi, Giovanni, I-20124 Milan (IT); Cirillo, Gianna, I-16124 Genova (IT); Aglietto, Mauro, I-56100 Pisa (IT); Benedetti, Enzo, I-56100 Pisa (IT)
(74) Representative: Barz, Peter, Dr.

(56) References cited:
- US-A- 3 519 703
- CHEMICAL ABSTRACTS, vol. 103, no. 6, 12th August 1985, page 20, abstract no. 37999d, Columbus, Ohio, US; E. BENEDETTI et al.: "Intermolecular interactions in blends of functionalized propylene polymers with poly(vinyl chloride) of polystyrene"

## Description

The present invention relates to a polymer composition based on a fluoroelastomer vulcanizable by peroxide or ionic or mixed ionic-peroxide vulcanization, and on an ethylene polymer or an ethylene/propylene or ethylene/butene-1 copolymer of the amorphous type, the ethylene polymer or copolymer having along the polymer chain a few ester groups -COOR (R is C₁-C₈ alkyl) in such an amount that the ester groups represent from 0.5% to 10% by weight of the total polymer. The ester groups are bound to the carbon atoms of the polymer chain either directly or through a -CH₂- group or in the form of 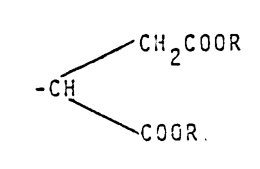
The abovesaid polymer additives are utilized in the composition with the fluoroelastomer in a proportion of 0.5 to 5 parts and preferably of 1 to 3 parts by weight for 100 parts by weight of rubber.

The present invention relates also to the use of said fluoroelastomer composition for producing vulcanized articles.

The elastomer compositions of the invention exhibit, with respect to the fluoroelastomer as such, generally improved processability properties, to be understood as a better extrudability.

The polymer additives according to the invention may be selected from polyethylene or ethylene/propylene copolymers having a weight ratio of the monomers ranging from 95/5 to 30/70, preferably from 90/10 to 50/50.

The starting fluoroelastomer can be used also in the form of a blend with elastomers such as an ethylene/propylene copolymer (EPR) of the type defined in Kirk Othmer "Encyclopedia of Chem. Technology" 3rd ed., vol. 8, page 422 (1979).

Such non-fluorinated elastomers are utilized in an amount of from to 5 to 50 parts by weight for 100 parts by weight of fluoroelastomer.

The polymer additives according to this invention can be prepared by known methods described in the technical literature, for example in Polymer Engineering and Science 26 (1) 9 (1986) and references cited therein.

Particularly suitable is a method which is based on the reaction between a polyolefin, an organic peroxide and diethylmaleate at 130-200^{o}C.

A method which permits introducing the group - CH₂COOR into the polyolefinic chain is described in Aglietto et al. "Atti dell'8^{o} Convegno Nazionale della Soc. Chim. Italiana Divisione Chimica Industriale, Trento 8-10 ottobre '86", page 80.

The polymeric additives according to the present invention impart to the fluoroelastomer composition the following characteristics:
- a high processsability, in particular as regards the processing in an extruder;
- an improved compatibility of the fluoroelastomers with ethylene/propylene elastomer copolymers (EPR), such blends having improved vulcanization rates and an improved extrudability as compared to blends without said additive;
- improved elastomer properties of the blend with EPR after vulcanization;
- decrease in the Mooney viscosity of the blends.

As types of fluoroelastomers which are vulcanizable with peroxides or by ionic systems and are suited to be used in the present invention, the following can be cited: CH₂ = CF₂/C₃F₆ copolymers and vinylidene fluoride/hexafluoropropene/tetrafluoroethylene terpolymers optionally containing peroxy cure sites, vinylidene fluoride/chlorotrifluoroethylene copolymers optionally containing tetrafluoroethylene, copolymers of CF₂=CF₂ with perfluoroalkylvinylethers, fluoro-silicone rubbers containing peroxy cure sites, rubber blends in which at least a rubber is vulcanizable with peroxides or with mixed vulcanization systems, in particular fluoroelastomer blends based on CH₂ = CF₂ and on C₂F₄/C₃H₆ elastomeric copolymers of type AFLAS ® and blends of a fluoroelastomer based on CH₂ = CF₂ and on EPR rubbers.

The fluoroelastomers containing peroxy cure sites are prepared according to conventional methods, for instance, by using, during the polymerization step, little amounts of brominated comononers such as brominated olefins and brominated perfluorovinylethers.

As ingredients for obtaining vulcanizable compositions from the abovesaid fluoroelastomers there are used those known in the art, for example the following:

### Peroxide vulcanizing agents

Organic peroxides, such as benzoyl peroxide, dicumyl peroxide, 2,5-dimethyl-2,5-di(t-butylperoxy)hexane, α,α'-bis(t-butyl-peroxy)-diisopropylbenzene, aliphatic or cyclic bis-peroxycarbamates.

### Radical vulcanizing co-agents

Unsaturated compounds (bi-, tri-, or polyfunctional), such as triallylcyanurate, triallylisocyanurate, divinylbenzene, m-phenyl-bis(maleimide).

In the case of ionic vulcanization or of a mixed ionic-peroxide vulcanization it is possible to use for example:

### Bis-nucleophilic vulcanizing agents

Diamine derivatives or aromatic polyhydroxy compounds as described in US-A-3876654 (Du Pont).

### Vulcanization accelerators

Quarternary ammonium salts as described in US-A-3655727 (3M), or quaternary phosphonium salts as described in US-A-3876654 or phosphoranaminic compounds as described in US-A-4259463(ME).

For both types of vulcanizing systems there may be furthermore used:

### Reinforcing fillers

Carbon black, silica.

### Acid acceptors

Lead, zinc, calcium, magnesium oxides.
In the fluoroelastomeric composition of the art, products such as vegetable waxes, low molecular weight polyethylene, various stearates, polyesters, octadecylamines and the like were used as plasticizers or lubricants.

The use of such coadjuvants was necessary owing to the poor extrudability properties of the blends and to the phenomena of adhesion to the molds and fouling of same.

The known processing coadjuvants give sometimes rise to problems of interference with the peroxide vulcanization system and of bad surface appearance of the molded piece.

Furthermore, in order to impart to the fluoroelastomers the well known properties of resistance to heat, to chemical agents and to solvents, it is necessary to subject the fluoroelastomers to post-curing at temperatures ranging in general from 190 to 250^{o}C for a time of from 10 to 30 hours.

During such step, the common plasticizers (polyglycols, stearates, organic phosphates, oleates, phthalates, etc.) volatilize and/or decompose. This results in a remarkable decay of the mechanical properties of the final articles, in particular:
- excessive hardness increase,
- decay of the compression-set resistance,
- decay of the elastic properties (low elongation value and high modulus value),
- low thermal stability preventing the use under severe application conditions.

In conclusion, the advantages obtainable in the processing step result in unacceptable disadvantages in the final articles.

Thus, the use of plasticizers or lubricants is limited to small amounts (1-2 p.h.r.) which do not sensibly alter the final properties of the vulcanizates, but, on the other side, are insuffiencient to meet the abovesaid requirements.

It was observed in particular that the use of perfluorosilicone oils permits to lower the hardness by 4-5 points, but it raises some difficulties as regards admixing and incorporating into the fluoroelastomer due to the incompatibility between the two polymeric systems.

Furthermore, a lowering in the vulcanization rate as well as worsening of the compression set value and of the heat resistance value were ascertained.

It has surprisingly been found that by using the additives according to the present invention in amounts ranging from 0.5 to 5 parts by weight and preferably from 1 to 3 parts by weight for 100 parts of rubber, blends based on fluoroelastomers only or fluoroelastomer/EPR blends are obtained, which - the other ingredients being the same (rubbers, cross-linking agent, acid acceptors etc. )-exhibit a superior behaviour as regards processability, as is evidenced by the lowering of the minimum torque, extrudability (Garvey test), as well as the elastomer properties and the adhesion of the vulcanizate to metal substrates.

An increase in the cross-linking rate is observed when the elastomer matrix contains, besides the fluoroelastomer of the above-cited type, based on vinylidene fluoride, also another elastomer comprising hydrogenated olefins, such as a tetrafluoroethylene/propylene copolymer (AFLAS®), or an ethylene/propylene/diene terpolymer (EPDR), (see examples 7-9).

In all cases a lowering of the minimum torque was observed, which is indicative of a better processibility of the blends.

The compatibilizing effect of polymeric additive EP containing ester groups can be evidenced by infrared spectrometry. In fact, the carbonyl band which, in the additive, is present at 1739 cm⁻¹, shift to 1734 cm⁻¹ if the additive is present in an amount of 5% by weight in blend with a fluoroelastomer based on vinylidene fluoride owing to the interaction between the carbonyl of the additive and the methylene groups of the fluorinated elastomer. The long sequences of olefin units C₂H₄ or C₂H₄/C₃H₆ intercalated in carbonyl groups secure, conversely, the compatibility with EPR elastomer composed of C₂H₄/C₃H₆ sequences.

The following examples are given merely to issustrate the application possibilities of the present invention.

### EXAMPLES 1-9

Following the conventional mixing techniques there were prepared rubber blends comprising the ingredients indicated in Tables 1, 2, 3. The amounts are expressed as parts by weight.

Using the blends so prepared, the tests and determinations indicated in Tables 1, 2, 3 were carried out.

### Ingredients used in the blends

- Elastomer 1: CH₂=CF₂/C₃F₆ copolymer in a 79/21 molar ratio, having a Mooney viscosity ML (1+4) at 100^{o}C of 75 (TECNOFLON NM^{R});
- Elastomer 2: CH₂=CF₂/C₃F₆/C₂F₄ in a 2/1/1 molar ratio, containing as a cure site monomer a brominated olefin, having a Mooney viscosity ML (1+4) at 100^{o}C of 120 and a total bromide content of 3500 ppm (VITON^{R}GF);
- Elastomer 3: C₂H₄/C₃H₆ copolymer in a 55/45 weight ratio, having a Mooney viscosity ML (1+4) at 100^{o}C of 40 (DUTRAL®CO 054);
- LUPERCO® 101 XL = 2,5 dimethyl-2,5-di-(t-butyl-peroxy)-hexane; 45% by weight product with 55% of an inert filler.
- TAIC: triallylisocyanurate;
- Black MT: carbon black for rubbers (ASTM N 990);
- Accelerator: 1-chloro, 1-benzyl, 1,1-diphenyl-N-diethylphosphoranamine;
- Bisphenol AF: hexafluoroisopropylidene-bis(4-hydroxybenzene);
- Additive 1: prepared by reacting an ethylene/propylene copolymer (weight ratio: 55/45) having a Mooney viscosity ML (1+4) at 100^{o}C of 40 with diethylmaleate and dicumyl peroxide at 190^{oC}, thereby obtaining a functionalization degree of 4% by weight of -COOC₂H₅ groups in the polymer chain;
- Additive 2: prepared by recting high density polyethylene with diethylmaleate and dicumyl peroxide at 190^{o}C, thereby obtaining a functionalization degree of 3% by weight of -COOC₂H₅ groups in the polymer chain. These additives are obtainable according to the procedures described in "Polymer Engineering and Science" vol. 26, No. 1, pages 9-14 and cited references, or
   acccording to IT-A-48950 A/85 or in the Aglietto et al. article, supra.

### Method of analysis used.

(1) ASTM D-2084
(2) ASTM D-1646
(3) ASTM D-2230-78 Method B; (b) Method A - System B
(4) ASTM D-412
(5) ASTM D-2240
(6) ASTM D-395 - Method B
(7) ASTM D-1329

### Detachability

- s =: poor
- d =: rather good
- b =: good.

### EXAMPLES 1-3

Comparison example 1 reports on the results obtained when using a blend prepared and vulcanized according to the prior art by means of an ionic system with bisphenol.

Examples 2 and 3 report on the data relating to blends respectively containing 2 and 5 parts per weight of additive 1.

A decrease in the Mooney viscosity value of the blends is observed, which is indicative of a better processability, and an improvement in the extrudability test.

### EXAMPLES 4-6

Comparison example 4 reports on the results obtained with a blend prepared and vulcanized according to the prior art by means of a peroxide system, and furthermore, a comparison is also made with the blends of examples 5 and 6 containing additive 1.

Improvements in the Mooney viscosity value of the blend and in the extrudability test were obtained.

### EXAMPLES 7-9

Example 7 relates to a fluoroelastomer/EPR 80/20 blend (comparison); the blends of examples 8 and 9 contain polymer additives 1 and 2, respectively.

Improvements in the Mooney viscosity value of the blend, in the extrudability and in the compression set were observed.

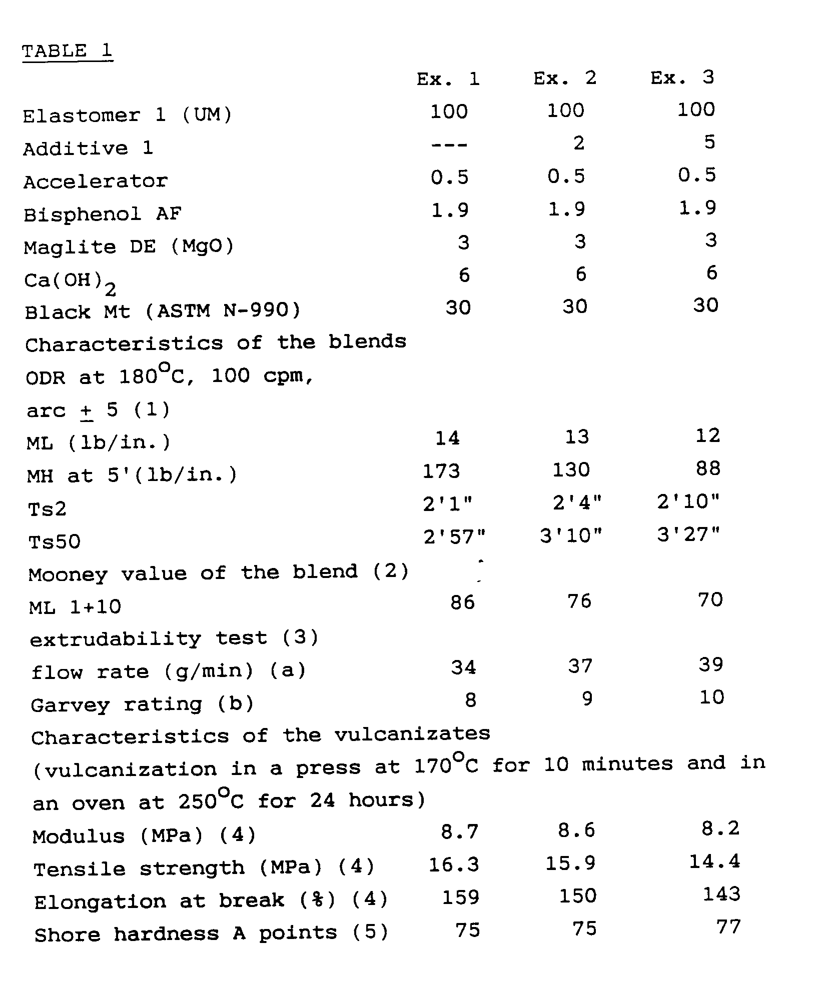

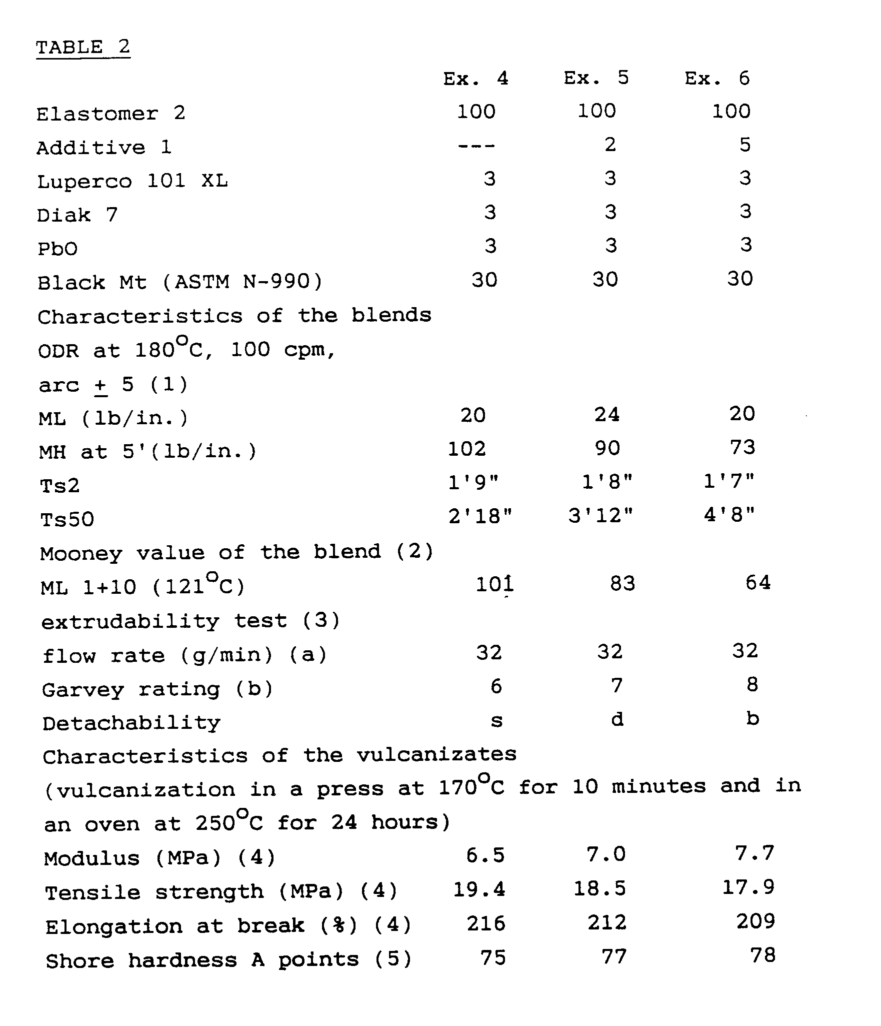

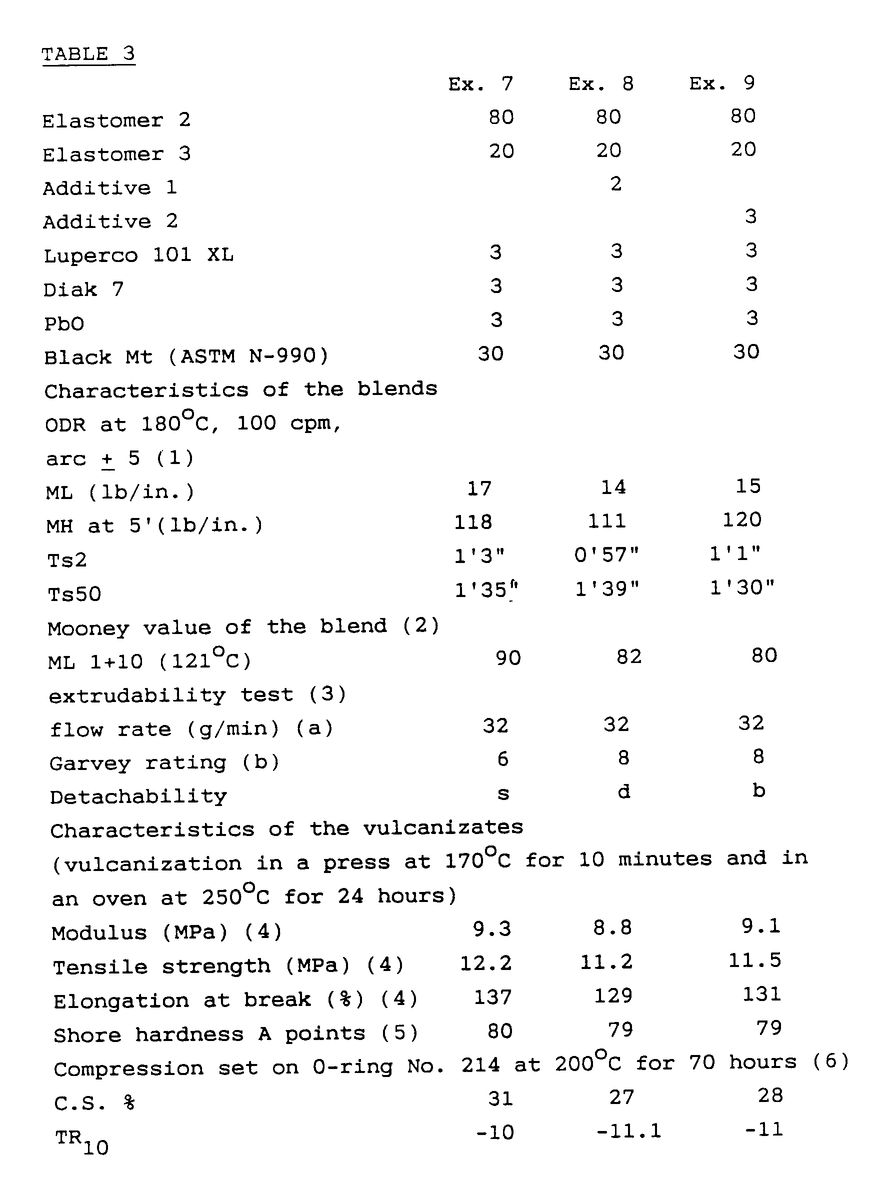

## Claims

1. A fluoroelastomer composition vulcanizable by means of peroxide and/or ionic vulcanization, comprising from 0.5 to 5 parts by weight per 100 parts by weight of fluoroelastomer of an ethylene polymer or of an ethylene/propylene or ethylene/butene-1 copolymer of the amorphous type and containing ester groups -COOR (wherein R is C₁-C₈ alkyl) along the polymer chain in an amount of from 0.5% to 10% by weight of the olefin polymer, said ester groups being bound to a carbon atom of the polymer chain either directly or through a group -CH₂- or in the form of

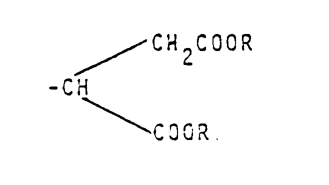

2. The fluoroelastomer composition according to claim 1, wherein the fluoroelastomer is selected from:
- copolymers of CH₂=CF₂ with perfluoropropene and optionally also with tetrafluoroethylene and with comonomers acting as cure sites for peroxide vulcanization;
- copolymers of CH₂=CF₂ with CF₂=CFC1;
- fluorosilicone rubbers containing cure sites for peroxides;
- copolymers of CF₂=CF₂ with perfluoroalkylvinylethers;
- copolymers of CF₂=CF₂ with propylene.

3. The fluoroelastomer composition according to claim 1 or 2 wherein the fluoroelastomer is used in admixture with 5 to 50 parts by weight of an ethylene/propylene elastomer copolymer per 100 parts by weight of fluoroelastomer.

4. The fluoroelastomer composition according to any one of claims 1 to 3 wherein the fluoroelastomer is vulcanizable by means of peroxides.

5. The use of the fluoroelastomer composition according to any one of claims 1 to 4 for producing vulcanized articles

## Patentansprüche

1. Fluorelastomer-zusammensetzung, die mittels Peroxid und/oder ionischer Vulkanisation vulkanisierbar ist, umfassend 0,5 bis 5 Gewichtsteile pro 100 Gewichtsteile Fluorelastomer eines Ethylenpolymers oder einen Ethylen/Propylen- oder Ethylen/Buten-1-Copolymers vom amorphen Typ, das Estergruppen -COOR (worin R C₁-C₈ Alkyl ist) entlang der Polymerkette in einer Menge von 0,5 bis 10 Gewichtsprozent des Olefinpolymers enthält, wobei die Estergruppen an ein Kohlenstoffatom der Polymerkette entweder direkt oder über eine Gruppe -CH₂- oder in Form von 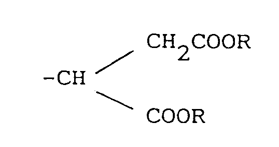 gebunden sind.

2. Fluorelastomer-Zusammensetzung anch Anspruch 1, worin das Fluorelastomer ausgewählt ist unter:
- Copolymeren von CH₂=CF₂ mit Perfluorpropen und gegebenenfalls auch Tetrafluorethylen und mit Comonomeren, die als Härtungsstellen für die Peroxid-Vulkanisation wirken;
- Copolymeren von CH₂=CF₂ mit CF₂=CFCl;
- Fluorsilicon-Kautschuken, die Härtungsstellen für Peroxide enthalten;
- Copolymeren von CF₂=CF₂ mit Perfluoralkylvinylethern;
- Copolymeren von CF₂=CF₂ mit Propylen.

3. Fluorelastomer-Zusammensetzung nach Anspruch 1 oder 2, worin das Fluorelastomer in Mischung mit 5 bis 50 Gewichtsteilen eines Ethylen/Propylen-Elastomer-Copolymers pro 100 Gewichtsteile Fluorelastomer verwendet wird.

4. Fluroelastomer-Zusammensetzung nach einem der Ansprüche 1 bis 3, worin das Fluorelastomer mit Peroxiden vulkanisisierbar ist.

5. Verwendung der Fluorelastomer-Zusammensetzung nach einem der Ansprüche 1 bis 4 zur Herstellung vulkanisierter Gegenstände.

## Revendications

1. Une composition fluoroélastomère vulcanisable par vulcanisation peroxydique et/ou ionique, comprenant de 0,5 à 5 parties en poids pour 100 parties de fluoroélastomère d'un polymère éthylique ou d'un copolymère éthylène/propylène ou éthylène/butène-1 de type amorphe et contenant des groupes esters -COOR (dans lequel R est un radical alkyle en C₁-C₈) répartis le long de la chaîne polymère en une quantité comprise entre 0,5 et 10% en poids du polymère oléfinique, lesdits groupes esters étant liés à un atome de carbone de la chaîne polymère soit directement, soit par l'intermédiaire d'un groupe -CH₂- ou étant sous la forme:

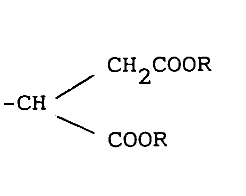

2. La composition fluoroélastomère selon la revendication 1, dans laquelle le fluoroélastomère est choisi dans le groupe comprenant:
- des copolymères de CH₂=CF₂ avec le perfluoropropène et, éventuellement également avec le tétrafluoroéthylène et avec des comonomères agissant en tant que sites de durcissement lors de la vulcanisation peroxydique;
- des copolymères de CH₂=CF₂ avec CF₂=CFCl;
- des caoutchoucs de fluorosilicone contenant des sites de durcissement pour les peroxydes;
- des copolymères de CF₂=CF₂ avec perfluoroalkylvinyléthers;
- des copolymères de CF₂=CF₂ avec le propylène.

3. La composition fluoroélastomère selon la revendication 1 ou 2, dans laquelle le fluoroélastomère est utilisé en mélange avec 5 à 50 parties en poids d'un copolymère élastomère éthylène/propylène par 100 parties en poids de fluoroélastomère.

4. La composition fluoroélastomère selon une quelconque des revendications 1 à 3, dans laquelle le fluoroélastomère est susceptible d'être vulcanisé par des agents peroxydiques.

5. L'emploi de la composition fluoroélastomère selon une quelconque des revendications 1 à 4, pour la production d'articles vulcanisés.
